# EUROPEAN PATENT APPLICATION

(11) **EP 4 470 857 A1**
(43) Date of publication of application: **04.12.2024**
(21) Application number: 23747395.4
(22) Date of filing: 27.01.2023
(51) Int. Cl.: B60T 17/22, B60T 7/10, B60T 13/74

(54) **BRAKE DEVICE AND CONTROL METHOD THEREFOR**

(30) Priority: 27.01.2022 KR 20220012478
(71) Applicant: HL Mando Corporation, Pyeongtaek-si, Gyeonggi-do 17962 (KR)
(72) Inventor: JEONG, Hyojin, Suwon-si Gyeonggi-do 16713 (KR)
(74) Representative: Pfenning, Meinig & Partner mbB
(86) International application number: PCT/KR2023/001293
(87) International publication number: WO 2023/146354

(57) **Abstract**

The brake device may comprise: a hydraulic pressure supply unit fluidically connected to wheel cylinders of a vehicle; a parking brake arranged at at least one of the wheel cylinders; a first processor electrically connected to the hydraulic pressure supply unit and the parking brake; and a second processor electrically connected to the parking brake, and electrically connected to the first processor through a signal line. The first processor can control the hydraulic pressure supply unit on the basis of output signals of a pedal sensor of the vehicle, control the parking brake on the basis of output signals of a parking switch of the vehicle, and provide periodic signals to the second processor through the signal line. The second processor can control the parking brake on the basis of the output signals of the pedal sensor if the periodic signals of the first processor are not received.

## Description

### [Technical Field]

The disclosed invention relates to a brake device with improved reliability, stability, and robustness, and a method of controlling the same.

### [Background Art]

Vehicles are essentially equipped with a brake device to perform braking, and various types of brake devices are being proposed for the safety of users and passengers.

In conventional brake devices, when a user steps on a brake pedal, by using a mechanically connected booster, hydraulic pressure (brake oil pressure) required for braking is provided to a wheel cylinder.

However, as the market demand for implementing various braking functions in detailed response to the vehicle operating environment increases, recently, a brake device, which includes a hydraulic pressure supply unit, which, when a user steps on a brake pedal, receives an electrical signal indicating the user's braking intention from a pedal sensor to supply hydraulic pressure required for braking to a wheel cylinder, has been developed.

In addition, a brake device, which includes a motor-mounted caliper, which, when a user presses a parking switch, receives an electrical signal indicating the user's parking intention from the parking switch to generate a braking force for parking, has been distributed.

### [Disclosure]

### [Technical Problem]

One aspect of the disclosed invention may provide a brake device which enables the reliability, stability, and robustness of a parking brake to be improved.

One aspect of the disclosed invention may provide a brake device which includes a main processor and a main driver as well as a redundant processor and a redundant driver which are for controlling and driving a parking brake.

### [Technical Solution]

A brake device according to one aspect of the disclosed invention may include a hydraulic pressure supply unit fluidly connected to wheel cylinders of a vehicle, a parking brake provided on at least one of the wheel cylinders, a first processor electrically connected to the hydraulic pressure supply unit and the parking brake, and a second processor electrically connected to the parking brake and electrically connected to the first processor through a signal line. The first processor may control the hydraulic pressure supply unit based on an output signal of a pedal sensor of the vehicle, may control the parking brake based on an output signal of a parking switch of the vehicle, and may provide a periodic signal to the second processor through the signal line, and when the periodic signal is not received from the first processor, the second processor may control the parking brake based on the output signal of the pedal sensor.

When the periodic signal is not received from the first processor, the second processor may control the parking brake based on the output signal of the parking switch.

When the periodic signal is not received from the first processor and the output signal of the pedal sensor is valid, the second processor may control the parking brake based on the output signal of the pedal sensor.

The first processor may control the hydraulic pressure supply unit based on an output signal of a wheel speed sensor of the vehicle. When the periodic signal is not received from the first processor, the second processor may control the parking brake based on the output signal of the wheel speed sensor.

When the periodic signal is not received from the first processor and the output signal of the wheel speed sensor is valid, the second processor may control the parking brake based on the output signal of the pedal sensor.

When the periodic signal is received from the first processor while the parking brake is controlled based on the output signal of the pedal sensor, the second processor may identify whether the vehicle is stopped based on an output signal of a wheel speed sensor of the vehicle.

When it is identified that the vehicle is stopped, the second processor may terminate controlling the parking brake based on the output signal of the pedal sensor. When it is identified that the vehicle is stopped, the first processor may control the hydraulic pressure supply unit based on the output signal of the pedal sensor of the vehicle.

When a signal indicating a failure of the hydraulic pressure supply unit is received, the second processor may control the parking brake based on the output signal of the pedal sensor.

When a signal indicating a normal operation of the hydraulic pressure supply unit is received while the parking brake is controlled based on the output signal of the pedal sensor, the second processor may identify whether the vehicle is stopped based on an output signal of a wheel speed sensor of the vehicle.

When it is identified that the vehicle is stopped, the second processor may terminate controlling the parking brake based on the output signal of the pedal sensor. When it is identified that the vehicle is stopped, the first processor may control the hydraulic pressure supply unit based on the output signal of the pedal sensor of the vehicle.

A method of controlling a brake device including a first processor and a second processor electrically connected to the first processor through a signal line according to one aspect of the disclosed invention, may include controlling, by the first processor, a hydraulic pressure supply unit fluidly connected to wheel cylinders of a vehicle based on an output signal of a pedal sensor of the vehicle, controlling, by the first processor, a parking brake provided on at least one of the wheel cylinders based on an output signal of a parking switch of the vehicle, providing, by the first processor, a periodic signal to the second processor through the signal line, and when the periodic signal is not received from the first processor, controlling, by the second processor, the parking brake based on the output signal of the pedal sensor.

### [Advantageous Effects]

According to one aspect of the disclosed invention, it is possible to provide a brake device which enables the reliability, stability, and robustness of a parking brake to be improved.

According to one aspect of the disclosed invention, it is possible to provide a brake device which includes a main processor and a main driver as well as a redundant processor and a redundant driver which are for controlling and driving a parking brake. Accordingly, even when a failure occurs in the main processor and/or the main driver, a parking brake can be controlled using the redundant processor and the redundant driver.

### [Description of Drawings]

FIGS. 1 and 2 illustrate a configuration of a brake device according to one embodiment.
FIG. 3 illustrates a configuration of a control circuit included in a brake device according to one embodiment.
FIG. 4 illustrates an example of a processor and a parking brake driver of a control circuit included in a brake device according to one embodiment.
FIGS. 5 and 6 illustrate an example of a processor and a parking brake driver of a control circuit included in a brake device according to one embodiment.
FIG. 7 illustrates an example of the operation of a brake device according to one embodiment.
FIG. 8 illustrates an example of the operation of a brake device according to one embodiment.

### [Best Mode]

Like reference numerals refer to like elements throughout the specification. Not all elements of the embodiments of the present specification will be described, and the description of what is commonly known in the technical field to which the disclosed invention pertains or what overlaps each other in the embodiments will be omitted. The terms as used throughout the specification, such as "unit," "module," "member," and "block" may be implemented in software and/or hardware. According to an embodiment, a plurality of "units," "modules," "members," and "blocks" may also be implemented using an element and one "unit," "module," "member," and "block" may include a plurality of elements.

Throughout the specification, when an element is referred to as being "connected to" another element, it may be directly or indirectly connected to the other element and the "indirectly connected to" includes connected to the other element via a wireless communication network.

In addition, unless explicitly described to the contrary, the word "comprise" and variations such as "comprises" or "comprising" will be understood to imply the inclusion of stated elements but not the exclusion of any other elements.

Throughout the specification, a description of a certain member being placed "on" another member includes not only a case of the one member being in contact with the another member but a case of still another member being present between the two members.

Terms "first," "second," and the like are used to differentiate a certain element from another element, but elements should not be construed to be limited by the terms.

Singular expressions include plural expressions unless the context clearly makes an exception.

The reference numerals used in operations are used for convenience of description and are not intended to describe the order of operations, and the operations may be performed in a different order unless the order of operations is clearly stated.

Hereinafter, the operating principle and embodiments of the disclosed invention will be described with reference to the accompanying drawings.

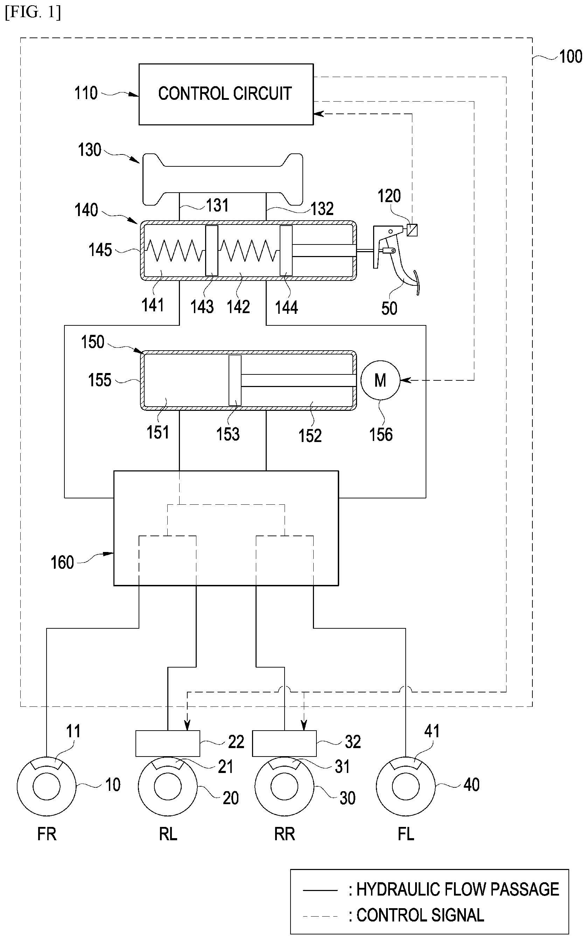

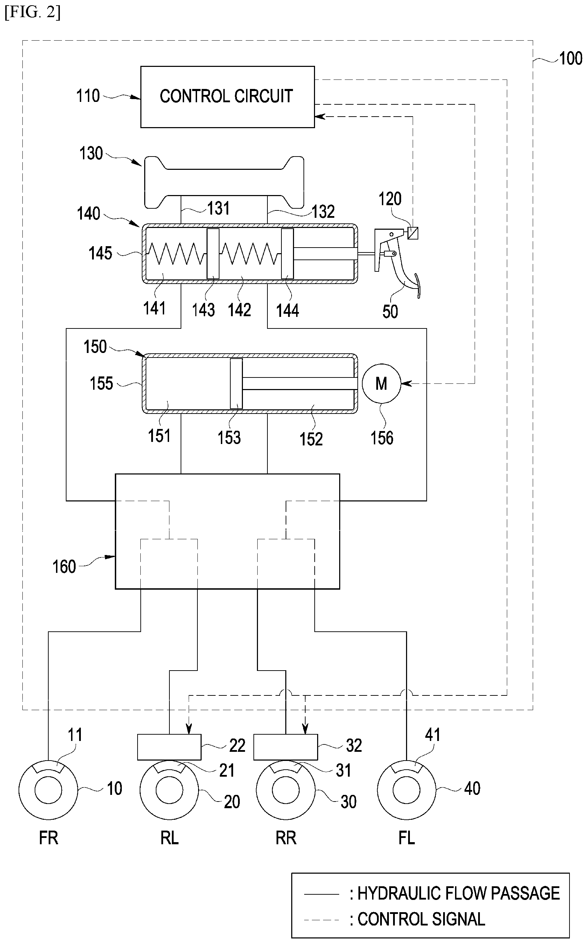

FIGS. 1 and 2 illustrate a configuration of a brake device according to one embodiment.

As shown in FIGS. 1 and 2, a plurality of wheels 10, 20, 30, and 40 may be provided in a vehicle to enable the vehicle to travel.

A brake disc that rotates together with one of the wheels 10, 20, 30, and 40 may be provided on one of the plurality of wheels 10, 20, 30, and 40, and a brake caliper is also provided to brake the rotation of each of the brake discs.

The brake calipers may each be provided with one of the plurality of wheel cylinders 11, 21, 31, and 41. The wheel cylinders 11, 21, 31, and 41 may accommodate a pressure medium supplied from a brake device 100, and the brake caliper may be moved to press the brake disc by the pressure of the press medium.

The wheel cylinders 11, 21, 31, and 41 may each be provided to correspond to one of the plurality of wheels 10, 20, 30, and 40. For example, a first wheel cylinder 11 may be provided on a first wheel 10 provided at a front right side of the vehicle, and a second wheel cylinder 21 may be provided on a second wheel 20 provided at a rear left side of the vehicle. In addition, a third wheel cylinder 31 may be provided on a third wheel 30 provided at a rear right side of the vehicle, and a fourth wheel cylinder 41 may be provided on a fourth wheel 40 provided at a front left side of the vehicle.

Parking brake modules 22 and 32 may be provided on at least some of the plurality of wheels 10, 20, 30, and 40. For example, a first parking brake module 22 and a second parking brake module 32 may be provided on the second wheel 20 and the third wheel 30 provided at the rear of the vehicle, respectively.

Each of the first parking brake module 22 and the second parking brake module 32 may move the brake caliper to press the brake disc by an electro-mechanical force without hydraulic pressure. Each of the first parking brake module 22 and the second parking brake module 32 may include a motor having a rotation shaft and a spindle that reciprocates by the rotation of the rotation shaft. Due to the movement of the spindle, the brake caliper may be moved to press the brake disc.

Each of the first parking brake module 22 and the second parking brake module 32 may move the brake caliper to press the brake disc in response to an engagement signal of a control circuit 110 and also move the brake caliper in response to a release signal of the control circuit 110 to be spaced apart from the brake disc.

The brake device 100 may detect a user's braking intention and provide hydraulic pressure of the pressure medium to the plurality of wheel cylinders 11, 21, 31, and 41 in response to the user's braking intention.

The brake device 100 may include a pedal sensor 120, a reservoir 130, a master cylinder 140, a hydraulic pressure supply unit 150, a hydraulic pressure control unit 160, and the control circuit 110. The pedal sensor 120, the reservoir 130, the master cylinder 140, the hydraulic pressure supply unit 150, the hydraulic pressure control unit 160, and the control circuit 110 shown in FIGS. 1 and 2 may not correspond to essential components of the brake device 100, and at least some of the components shown in FIGS. 1 and 2 may be omitted.

The pedal sensor 120 may detect the movement of the brake pedal 50 that moves according to a user's braking intention and generate an electrical signal (pedal signal) depending on a moving distance and/or moving speed of the brake pedal 50.

The reservoir 130 may store pressure media such as brake oil. The reservoir 130 may be connected to each component element to supply or receive a pressure medium. The reservoir 130 may be fluidly connected to the master cylinder 140 through reservoir flow passages 131 and 132.

The master cylinder 140 may compress and discharge a pressure medium accommodated therein according to a pedal force of the brake pedal 50. The master cylinder 140 may include a first master chamber 141 and a second master chamber 142 which are formed by a cylinder block 145. A first master piston 143 and a second master piston 144 are provided in the first master chamber 141 and the second master chamber 142, respectively.

The hydraulic pressure supply unit 150 may generate hydraulic pressure of a pressure medium in response to a user's braking intention.

The hydraulic pressure supply unit 150 may include a cylinder block 155 that accommodates the pressure medium, a hydraulic piston 153 provided to reciprocate in the cylinder block 155, and hydraulic chambers 151 and 152 partitioned by the hydraulic piston 153. The cylinder block 155, the hydraulic piston 153, and the hydraulic chambers 151 and 152 may not correspond to essential components of the hydraulic pressure supply unit 150, and at least some thereof may be omitted.

Hydraulic pressure may be generated in the hydraulic chambers 151 and 152 by the reciprocating movement of the hydraulic piston 153. The hydraulic pressure in the hydraulic chambers 151 and 152 may be transmitted to the wheel cylinders 11, 21, 31, and 41 through the hydraulic pressure control unit 160.

The hydraulic chambers 151 and 152 may include a first hydraulic chamber 151 positioned in front of the hydraulic piston 153 (at a left side of the hydraulic piston in FIG. 1) and a second hydraulic chamber 152 positioned behind the hydraulic piston 153 (at a right side of the hydraulic piston in FIG. 1).

The first hydraulic chamber 151 may be formed by the cylinder block 155 and a front surface of the hydraulic piston 153, and the volume of the first hydraulic chamber 151 may be changed as the hydraulic piston 153 moves. In addition, the second hydraulic chamber 152 may be formed by the cylinder block 155 and a rear surface of the hydraulic piston 153, and the volume of the second hydraulic chamber 152 may be changed as the hydraulic piston 153 moves. The first hydraulic chamber 151 and the second hydraulic chamber 152 may each be fluidly connected to the hydraulic pressure control unit 160 through a hydraulic flow passage.

The hydraulic pressure supply unit 150 may include a hydraulic motor 156 that generates a rotational force. In addition, the hydraulic pressure supply unit 150 may further include a power conversion unit that selectively converts the rotational force of the hydraulic motor 156 into translational movement of the hydraulic piston 153.

The hydraulic pressure control unit 160 may be provided between the hydraulic pressure supply unit 150 and the wheel cylinders 11, 21, 31, and 41. The hydraulic pressure control unit 160 may include, for example, a plurality of hydraulic flow passages each extending from the hydraulic pressure supply unit 150 to one of the wheel cylinders 11, 21, 31, and 41, and a valve block including a plurality of valves that may allow or block the flow of a pressure medium in the plurality of hydraulic flow passages.

The hydraulic pressure control unit 160 may control the hydraulic flow passage to guide hydraulic pressure generated by the hydraulic pressure supply unit 150 to the wheel cylinders 11, 21, 31, and 41 or may control the hydraulic flow passage to collect hydraulic pressure of the wheel cylinders 11, 21, 31, and 41 to the hydraulic pressure supply unit 150.

For example, in response to an increase in stroke of the brake pedal 50, while the hydraulic piston 153 moves forward as shown in FIG. 1, the hydraulic pressure control unit 160 may control the flow passage to guide hydraulic pressure generated in the first hydraulic chamber 151 to the wheel cylinders 11, 21, 31, and 41. In addition, although not shown in the drawing, while the hydraulic piston 153 moves forward and then backward, the hydraulic pressure control unit 160 may control the flow passage to guide hydraulic pressure generated in the second hydraulic chamber 152 to the wheel cylinders 11, 21, 31, and 41.

For example, in response to a decrease in stroke of the brake pedal 50, while the hydraulic piston 153 moves forward as shown in FIG. 1, the hydraulic pressure control unit 160 may control the flow passage to collect hydraulic pressure of the wheel cylinders 11, 21, and 31, and 41 to the first hydraulic chamber 151. In addition, although not shown in the drawing, while the hydraulic piston 153 moves forward and then backward, the hydraulic pressure control unit 160 may control the flow passage to collect hydraulic pressure of the wheel cylinders 11, 21, 31, and 41 to the second hydraulic chamber 152.

When a failure such as an inoperable state of the hydraulic pressure supply unit 150 occurs, the hydraulic pressure control unit 160 may control the hydraulic flow passage to guide hydraulic pressure generated by the master cylinder 140 to the wheel cylinders 11, 21, 31, and 41 or may control the hydraulic flow passage to collect hydraulic pressure of the wheel cylinders 11, 21, 31, and 41 to the master cylinder 140.

For example, in response to a failure such as an inoperative state of the hydraulic pressure supply unit 150, as shown in FIG. 2, the hydraulic pressure control unit 160 may control the flow passage to guide hydraulic pressure generated in the first master chamber 141 to the wheel cylinders 11 and 21 while the first master piston 143 moves forward and guide hydraulic pressure generated in the second master chamber 142 to the wheel cylinders 31 and 41 while the second master piston 144 moves forward.

Hereinafter, a state in which the master cylinder 140 and the wheel cylinders 11, 21, 31, and 41 are hydraulically connected due to a failure occurring in the hydraulic pressure supply unit 150 may be referred to as a fallback mode.

In addition, when a failure occurs, such as power not being supplied to the brake device 100 or the control circuit 110 being inoperable, as shown in FIG. 2, a flow passage may be formed in the hydraulic pressure control unit 160 to guide hydraulic pressure generated by the master cylinder 140 to the wheel cylinders 11, 21, 31, and 41. In this way, not only when a failure occurs in the hydraulic pressure supply unit 150, but also when a failure occurs, such as power not being supplied to the brake device 100 or the control circuit 110 being inoperable, the brake device 100 may operate in a fallback mode.

The control circuit 110 may include a plurality of semiconductor devices and may be referred as various names such as electronic control unit (ECU). The control circuit 110 may include, for example, a plurality of processors and/or a plurality of memories.

The control circuit 110 may receive a pedal signal indicating a user's braking intention from the pedal sensor 120 and provide an electrical signal for supplying or collecting the hydraulic pressure to or from the wheel cylinders 11, 21, 31, and 41 to each of the hydraulic pressure supply unit 150 and the hydraulic pressure control unit 160 in response to the pedal signal.

The control circuit 110 may receive a wheel speed signal indicating a rotation speed of the wheels 10, 20, 30, and 40 from a wheel speed sensor 170 and provide an electrical signal for supplying or collecting hydraulic pressure to or from the wheel cylinders 11, 21, 31, and 41 to each of the hydraulic pressure supply unit 150 and the hydraulic pressure control unit 160 in response to the wheel speed signal so as to implement an anti-lock braking system (ABS).

The control circuit 110 may receive an engagement/release signal indicating a user input for engaging or releasing a parking brake from a parking switch and provide an electrical signal (engagement signal or release signal) to the parking brake modules 22 and 32 to engage or release the parking brake in response to the engagement/release signal.

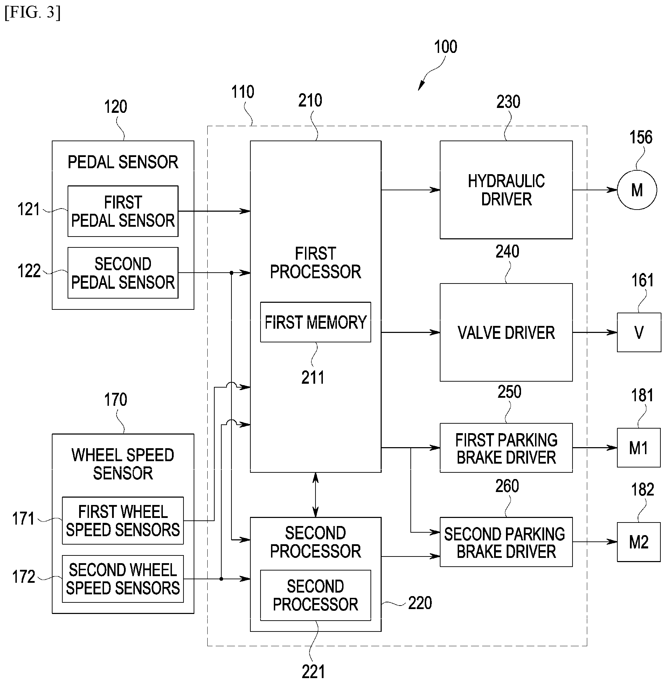

FIG. 3 illustrates a configuration of a control circuit included in a brake device according to one embodiment.

Referring to FIG. 3, a brake device 100 may include a pedal sensor 120, a wheel speed sensor 170, a hydraulic motor 156, a valve block 161, parking brake motors 181 and 182, and/or a control circuit 110. The pedal sensor 120, the wheel speed sensor 170, the hydraulic motor 156, the valve block 161, the parking brake motors 181, 182, and/or the control circuit 110 may not be essential components of the brake device 100, and at least some of the components shown in FIG. 3 may be omitted.

The pedal sensor 120 may detect the movement of the brake pedal 50 that moves according to a user's braking intention and provide an electrical signal (pedal signal) indicating a moving distance and/or moving speed of the brake pedal 50 to the control circuit 110 of the brake device 100.

The pedal sensor 120 may include a first pedal sensor 121 and a second pedal sensor 122.

The first pedal sensor 121 and the second pedal sensor 122 may each detect a moving distance and/or moving speed of the brake pedal 50 and may provide electrical signals (first pedal signal and second pedal signal) indicating the detected moving distance and/or moving speed to the control circuit 110.

The first pedal sensor 121 may receive power from a different power source from the second pedal sensor 122. For example, the first pedal sensor 121 may receive power from a different battery or a different power circuit from the second pedal sensor 122.

As shown in FIG. 3, the first pedal sensor 121 and the second pedal sensor 122 may provide the first pedal signal and the second pedal signal to a first processor 210 of the control circuit 110, respectively. Accordingly, even when a failure such as inoperability occurs in any one of the first pedal sensor 121 and the second pedal sensor 122, the first processor 210 may obtain a pedal signal from another pedal sensor and identify a driver's braking intention.

In addition, the second pedal sensor 122 may provide the second pedal signal to a second processor 220 of the control circuit 110. Accordingly, even when a failure such as inoperability occurs in the first processor 210, the second processor 220 may obtain the second pedal signal from the second pedal sensor 122 and identify a driver's braking intention.

The wheel speed sensor 170 may detect the rotation of wheels 10, 20, 30, and 40 as a vehicle travels and provide an electrical signal (wheel speed signal) corresponding to a rotation speed to the control circuit 110 of the brake device 100.

The wheel speed sensor 170 may include first wheel speed sensors 171 and second wheel speed sensors 172 provided in the wheels 10, 20, 30, and 40. One of the wheels 10, 20, 30, and 40 may be provided with one of the first wheel speed sensors 171 and one of the second wheel speed sensors 172. In other words, each of the wheels 10, 20, 30, and 40 may be provided with two wheel speed sensors (the first wheel speed sensor and the second wheel speed sensor).

The first wheel speed sensors 171 and the second wheel speed sensors 172 may each detect the rotation of the wheels 10, 20, 30, and 40 and may provide electrical signals (first wheel speed signal and second wheel speed signal) corresponding to the rotation speeds of the wheels 10, 20, 30, and 40 to the control circuit 110, respectively.

The first wheel speed sensors 171 and the second wheel speed sensors 172 may receive power from different power sources. For example, the first wheel speed sensors 171 may receive power from a different battery from the second wheel speed sensors 172 or may receive power from a different power circuit from the second wheel speed sensors 172.

As shown in FIG. 3, the first wheel speed sensors 171 and the second wheel speed sensors 172 may provide the first wheel speed signal and the second wheel speed signal to the first processor 210 of the control circuit 110, respectively. Accordingly, even when a failure such as inoperability occurs in any one of the first wheel speed sensors 171 and the second wheel speed sensors 172, the first processor 210 may obtain a wheel speed signal from another wheel speed sensor and identify the rotation speeds of the wheels 10, 20, 30, and 40.

In addition, the second wheel speed sensors 172 may provide the second wheel speed signal to the second processor 220 of the control circuit 110. Accordingly, even when a failure such as inoperability occurs in the first processor 210, the second processor 220 may obtain the second wheel speed signal from the second wheel speed sensors 172 and identify the rotation speeds of the wheels 10, 20, 30, and 40.

The hydraulic motor 156 may be included in the hydraulic pressure supply unit 150 and may generate power (rotational force) with which the hydraulic pressure supply unit 150 generates hydraulic pressure of a pressure medium. The rotation provided by the hydraulic motor 156 may be converted into translational movement for moving a hydraulic piston 153.

The valve block 161 may be included in the hydraulic pressure control unit 160 and may control a flow passage for a pressure medium which extends from the hydraulic pressure supply unit 150 to wheel cylinders 11, 21, 31, and 41. The valve block 161 may include a plurality of solenoid valves provided on the flow passage for the pressure medium.

The parking brake motors 181 and 182 may be included in parking brake modules 22 and 32, respectively. For example, a first parking brake motor 181 may be included in a first parking brake module 22, and a second parking brake motor 182 may be included in a second parking brake module 32. The parking brake motors 181 and 182 may generate power (rotational force) with which the parking brake modules 22 and 32 brake a second wheel 20 and a third wheel 30. The rotation provided by the parking brake motors 181 and 182 may be converted into translation movement for moving a brake caliper by a spindle.

In response to a user's braking intention through a brake pedal 50 and the rotation speeds of the wheels 10, 20, 30, and 40, the control circuit 110 may provide an electrical signal for providing hydraulic pressure of a pressure medium to the wheel cylinders 11, 21, 31, and 41 or may provide an electrical signal to the parking brake modules 22 and 32.

The control circuit 110 may include a hydraulic driver 230, a valve driver 240, a first parking brake driver 250, a second parking brake driver 260, a first processor 210, and a second processor 220. The hydraulic driver 230, the valve driver 240, the first parking brake driver 250, the second parking brake driver 260, the first processor 210, and the second processor 220 may not correspond to essential components of the control circuit 110, and at least some of the components shown in FIG. 3 may be omitted.

The hydraulic driver 230 may receive a control signal from the first processor 210 and provide a driving current for driving the hydraulic motor 156 of the hydraulic pressure supply unit 150 to the hydraulic motor 156 in response to the control signal of the first processor 210. For example, in response to the control signal of the first processor 210, the hydraulic driver 230 may provide a driving current for moving the hydraulic piston 153 in a forward direction to the hydraulic motor 156 or may provide a driving current for moving the hydraulic piston 153 in a backward direction to the hydraulic motor 156. The hydraulic driver 230 may include, for example, an inverter circuit for controlling a driving current of the hydraulic motor 156 and a gate driver for driving an input terminal of the inverter circuit.

The valve driver 240 may receive the control signal from the first processor 210 and provide a driving current for driving the valve block 161 of the hydraulic pressure control unit 160 to the valve block 161 in response to the control signal of the first processor 210. For example, in response to the control signal of the first processor 210, the hydraulic driver 230 may provide a driving current to each valve included in the valve block 161 such that a flow passage may be formed from a first hydraulic chamber 151 of the hydraulic pressure supply unit 150 to the wheel cylinders 11, 21, 31, and 41 or may provide a driving current to each valve included in the valve block 161 such that a flow passage may be formed from the first hydraulic chamber 151 of the hydraulic pressure supply unit 150 to the wheel cylinders 11, 21, 31, and 41.

The first parking brake driver 250 may receive an engagement/release signal from at least one processor of the first processor 210 and the second processor 220 and provide a driving current for engaging a parking brake to the first parking brake motor 181 in response to the received engagement/release signal. For example, in response to the received control signal, the first parking brake driver 250 may provide a driving current, which is for moving the brake caliper to restrain the rotation of the second wheel 20, to the first parking brake motor 181 or may provide a driving current, which is for moving the brake caliper to release the restraint of the brake disc, to the first parking brake motor 181. The first parking brake driver 250 may include, for example, an H-bridge circuit for controlling a driving current of the hydraulic motor 156 and a gate driver for driving an input terminal of the H-bridge circuit.

The second parking brake driver 260 may receive an engagement/release signal from at least one processor of the first processor 210 and the second processor 220 and provide a driving current for engaging the parking brake to the second parking brake motor 182 in response to the received engagement/release signal. For example, in response to the received control signal, the second parking brake driver 260 may provide a driving current, which is for moving the brake caliper to restrain the rotation of the third wheel 30, to the second parking brake motor 182 or may provide a driving current, which is for moving the brake caliper to release the restraint of the brake disc, to the second parking brake motor 182. The second parking brake driver 260 may include, for example, an H-bridge circuit for controlling a driving current of the hydraulic motor 156 and a gate driver for driving an input terminal of the H-bridge circuit.

The first processor 210 may process output signals of the pedal sensor 120 and the wheel speed sensor 170 and control the brake device 100 based on the processed output signals. Specifically, the first processor 210 may control the hydraulic motor 156 and/or the valve block 161 based on the first pedal signal and the second pedal signal of the first pedal sensor 121 and the second pedal sensor 122. The first processor 210 may control the hydraulic motor 156 and/or the valve block 161 based on the first and second wheel speed signals of the first wheel speed sensor 171 and the second wheel speed sensor 172. In addition, the first processor 210 may control the first parking brake module 22 and the second parking brake module 32 based on an electrical signal (engagement/release signal) of a parking switch.

The first processor 210 may include one semiconductor element or a plurality of semiconductors. The first processor 210 may include one core or a plurality of cores inside the semiconductor element. In addition, the first processor 210 may be referred to as various names such as a micro controller unit (MCU).

The first processor 210 may include a first memory 211 that records/stores programs and data for braking or parking a vehicle based on a user's intention to brake and/or park the vehicle.

The first memory 211 may provide programs and data to the first processor 210 and store temporary data generated during a calculation operation of the first processor 210. The first memory 211 may include, for example, a volatile memory such as a static random access memory (S-RAM) or a dynamic random access memory (D-RAM), and a non-volatile memory such as a read-only memory (ROM), an erasable programmable ROM (EPROM), or a flash memory.

The first processor 210 may provide a control signal to the hydraulic motor 156 and/or the valve block 161 based on a pedal signal of the pedal sensor 120 according to the program and data stored in the first memory 211. Specifically, the first processor 210 may provide a driving signal for generating hydraulic pressure to the hydraulic motor 156 and provide an opening/closing signal, which is for transmitting hydraulic pressure to the wheel cylinders 11, 21, 31, and 41, to the valve block 161.

For example, the first processor 210 may receive the first and second pedal signals indicating an increase or decrease in stroke of the brake pedal 50 from the first pedal sensor 121 and the second pedal sensor 122 and provide a control signal for controlling the hydraulic motor 156 and/or the valve block 161 based on the received first and second pedal signals.

In addition, the first processor 210 may receive the first and second wheel speed signals indicating the rotation speeds of the wheels 10, 20, 30, and 40 from the first wheel speed sensor 171 and the second wheel speed sensor 172 and provide the control signal for controlling the hydraulic motor 156 and/or the valve block 161 based on the received first and second wheel speed signals. Thus, the first processor 210 may implement an ABS.

The first processor 210 may control the first parking brake module 22 and the second parking brake module 32 installed on the second wheel 20 and the third wheel 30, respectively.

The first processor 210 may provide an engagement/release signal, which is for engaging or releasing the parking brake according to the program and data stored in the first memory 211, to the first parking brake module 22 and/or the second parking brake module 32.

For example, the first processor 210 may receive a parking command for engaging or releasing the parking brake from the parking switch through a vehicle communication network NT or directly and provide an engagement signal or a release signal to the first parking brake module 22 and/or the second parking brake module 32 in response to the received parking command. In response to the engagement signal of the first processor 210, the first and second parking brake modules 22 and 32 may each restrain a brake disc to prevent the rotation of the wheels. In response to the release signal of the first processor 210, the first and second parking brake modules 22 and 32 may each release the restraint of the brake disc to allow the rotation of the wheels.

The first processor 210 may exchange data and/or signals with the second processor 220 through various paths. For example, the first processor 210 may exchange data and/or signals with the second processor 220 through a signal line connected to the second processor 220 or may exchange data and/or signals with the second processor 220 through an external device commonly connected to the second processor 220. In addition, the first processor 210 may exchange data and/or signals with the second processor 220 through a vehicle communication network.

The first processor 210 may exchange various types of data and/or signals with the second processor 220. For example, while normally operating, the first processor 210 may periodically transmit a signal (for example, a pulse signal) to the second processor 220. The second processor 220 may receive a periodic signal (for example, a pulse signal) from the first processor 210 and may be deactivated while receiving the periodic signal from the first processor 210.

The first processor 210 may receive a periodic signal (for example, a pulse signal) from the second processor 220 and identify whether the second processor 220 is normally operating based on whether the periodic signal is received from the second processor 220.

The second processor 220 may process output signals of the second pedal sensor 122 and the second wheel speed sensor 172 and control at least one of the first parking brake module 22 or the second parking brake module 32 based on the processed output signals.

The second processor 220 may include one semiconductor element or a plurality of semiconductors. The second processor 220 may include one core or a plurality of cores inside the semiconductor element. In addition, the second processor 220 may be referred to as various names such as an MCU.

The second processor 220 may exchange data and/or signals with the first processor 210 through various paths. For example, the second processor 220 may exchange data and/or signals with the first processor 210 through a signal line connected to the first processor 210, an external device commonly connected to the first processor 210, or a vehicle communication network.

The second processor 220 may exchange various types of data and/or signals with the first processor 210. For example, the second processor 220 may receive a periodic signal (for example, a pulse signal) from the first processor 210. The second processor 220 may be deactivated while receiving the periodic signal (for example, the pulse signal) from the first processor 210. In other words, while receiving the periodic signal from the first processor 210, the second processor 220 may not output a control signal to the second parking brake driver 260.

The second processor 220 may be activated based on the periodic signal (for example, the pulse signal) not being received from the first processor 210. While normally operating, the first processor 210 may periodically transmit a signal (for example, a pulse signal) to the second processor 22. When the first processor does not normally operate due to a failure or the like, the first processor 210 may not transmit a periodic signal to the second processor 220. In this way, when the periodic signal is not received from the first processor 210, the second processor 220 may identify that the first processor 210 does not normally operate and may be activated to perform at least some of functions of the first processor 210.

The second processor 220 may output the control signal to the second parking brake driver 260 based on the periodic signal not being received from the first processor 210. When the periodic signal is not received from the first processor 210, the second processor 220 may identify whether a valid second pedal signal is received from the second pedal sensor 122 and whether a valid second wheel speed signal is received from the second wheel speed sensor 172. When the valid second pedal signal and the valid second wheel speed signal are received, the second processor 220 may output the control signal to the second parking brake driver 260 based on the second pedal signal and the second wheel speed signal.

For example, the second processor 220 may output the control signal to the second parking brake driver 260 based on the second pedal signal of the second pedal sensor 122. The brake device 100 may compensate for the lack of a braking force applied by a driver in a fallback mode by using at least one of the first parking brake module 22 or the second parking brake module 32.

For example, the second processor 220 may output the control signal to the second parking brake driver 260 based on the second wheel speed signal of the second wheel speed sensors 172. By using at least one of the first parking brake module 22 or the second parking brake module 32, the brake device 100 may implement an ABS for preventing the locking of the wheels 10, 20, 30, and 40.

The second processor 220 may output the control signal to the second parking brake driver 260 based on an output signal (engagement signal or release signal) of the parking switch. The second processor 220 may control at least one of the first parking brake module 22 or the second parking brake module 32 in response to a driver's parking intention.

While normally operating, the second processor 220 may transmit a periodic signal (for example, a pulse signal) to the first processor 210. The first processor 210 may identify whether the second processor 220 is normally operating based on whether the periodic signal is received from the second processor 220.

The second processor 220 may include a second memory 221 that records/stores programs and data for parking a vehicle based on a user's parking intention.

The second memory 221 may provide programs and data to the second processor 220 and store temporary data generated during a calculation operation of the second processor 220. The second memory 221may include, for example, a volatile memory such as an S-RAM or a D-RAM, and a non-volatile memory such as a ROM, an EPROM, or a flash memory.

The second processor 220 may provide an engagement/release signal for engaging or releasing the parking brake according to the program and data stored in the first memory 211 to at least one of the first parking brake module 22 or the second parking brake module 32. For example, the second processor 220 may provide the engagement/release signal to the second parking brake module 32 as shown in FIG. 2.

As described above, the brake device 100 may include the first processor 210, and the first processor 210 may control the brake device 100 to brake a vehicle or engage the parking brake in response to a user's braking intention and parking intention. In addition, the brake device 100 may further include the second processor 220 to provide redundancy. When the first processor 210 does not normally operate, the second processor 220 may replace the first processor 210 to brake a vehicle in response to the user's braking intention or parking intention. Accordingly, even when the first processor 210 does not normally operate, the brake device 100 may engage the parking brake through the operation of the second processor 220.

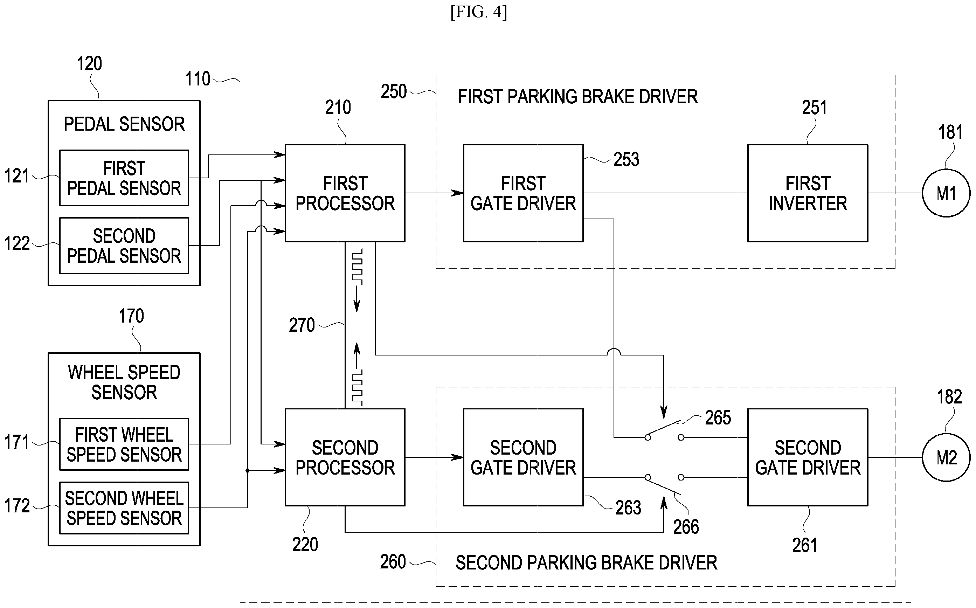

FIG. 4 illustrates an example of a processor and a parking brake driver of a control circuit included in a brake device according to one embodiment.

Referring to FIG. 4, a brake device 100 may include a pedal sensor 120, a wheel speed sensor 170, a control circuit 110, a first parking brake motor 181, and a second parking brake motor 182. The pedal sensor 120, the wheel speed sensor 170, the first parking brake motor 181, and the second parking brake motor 182 may be the same as the pedal sensor, the wheel speed sensor, the first parking brake motor, and the second parking brake motor described above with reference to FIG. 3.

The control circuit 110 may include a first processor 210, a second processor 220, a signal line 270, a connection switch 271, a first parking brake driver 250, and a second parking brake driver 260. The first processor 210 and the second processor 220 may be the same as the first processor and the second processor described above with reference to FIG. 3.

The first processor 210 and the second processor 220 may be connected through the signal line 270. The first processor 210 may exchange data and/or signals with the second processor 220 through the signal line 270.

For example, the first processor 210 may provide a periodic signal (for example, a pulse signal) to the second processor 220 through the signal line 270. The second processor 220 may provide a periodic signal (for example, a pulse signal) to the first processor 210 through the signal line 270. The first processor 210 may identify whether the second processor 220 is normally operating based on whether the periodic signal is received from the second processor 220. The second processor 220 may identify whether the first processor 210 is normally operating based on whether the periodic signal is received from the first processor 210.

In addition, the first processor 210 may provide a periodic signal to the second processor 220 through a vehicle communication network. In addition, the second processor 220 may provide a periodic signal to the first processor 210 through the vehicle communication network.

While the first processor 210 is normally operating, the first parking brake driver 250 and the second parking brake driver 260 may control a driving current of the first parking brake motor 181 and a driving current of the second parking brake motor 182 in response to the control signal of the first processor 210. In addition, when the first processor 210 does not normally operate, the second parking brake driver 260 may control a driving current of the second parking brake motor 182 in response to the control signal of the second processor 220.

The first parking brake driver 250 may include a first inverter 251 and a first gate driver 253. The first inverter 251 and the first gate driver 253 may not correspond to essential components of the first parking brake driver 250, and at least some thereof may be omitted.

In addition, the second parking brake driver 260 may include a second inverter 261, a second gate driver 263, a first switch 265, and a second switch 266. The second inverter 261, the second gate driver 263, the first switch 265, and the second switch 266 may not correspond to essential components of the second parking brake driver 260, and at least some thereof may be omitted.

The first inverter 251 may be implemented in various topologies according to a type of the first parking brake motor 181. For example, when the first parking brake motor 181 includes a three-phase motor, the first inverter 251 may include a three-phase inverter circuit. In addition, when the first parking brake motor 181 includes a single-phase motor, the first inverter 251 may include an H-bridge circuit.

The second inverter 261 may be electrically provided between the second processor 220 and the second parking brake motor 182 and may control a driving current of the second parking brake motor 182 in response to the control signal of the second processor 220. The configuration and operation of the second inverter 261 may be the same as those of the first inverter 251.

The first gate driver 253 may be electrically provided between the first processor 210 and the first and second inverters 251 and 261 and may drive input terminals of the first and second inverters 251 and 261 in response to the control signal of the first processor 210. For example, the first gate driver 253 may boost the control signal of the first processor 210 between the first processor 210 and the first and second inverters 251 and 261 and provide the boosted control signal to each of the first and second inverters 251 and 261. In other words, the first gate driver 253 may drive the input terminal of each of the first and second inverters 251 and 261 in response to the control signal of the first processor 210.

The second gate driver 263 may be electrically provided between the second processor 220 and the second inverter 261 and may drive the input terminal of the second inverter 261 in response to the control signal of the second processor 220. The configuration and operation of the second gate driver 263 may be the same as those of the first gate driver 253.

The first and second switches 265 and 266 may be provided between the first and second gate drivers 253 and 263 and the second inverter 261. For example, the first switch 265 may be provided between the first gate driver 253 and the second inverter 261, and the second switch 266 may be provided between the second gate driver 263 and the second inverter 261.

The first switch 265 may allow or block a control signal transmitted from the first gate driver 253 to the second inverter 261.

The first processor 210 may provide a first on-signal to the first switch 265 to turn on (close) the first switch 265. The first switch 265 may allow the control signal transmitted from the first gate driver 253 to the second inverter 261 in response to the first on-signal of the first processor 210. In addition, the first switch 265 may block the control signal transmitted from the first gate driver 253 to the second inverter 261 in response to the first on-signal of the first processor 210 not being received.

While normally operating, the first processor 210 may provide the first on-signal to the first switch 265. On the other hand, unless the first processor 210 normally operates, the first on-signal may not be provided to the first switch 265. Thus, the first switch 265 may allow the control signal transmitted from the first gate driver 253 to the second inverter 261 while the first processor 210 is normally operating and block the control signal transmitted from the first gate driver 253 to the second inverter 261 unless the first processor 210 normally operates.

The second switch 266 may allow or block a control signal transmitted from the second gate driver 263 to the second inverter 261.

The second processor 220 may provide a second on-signal to the second switch 266 to turn on (close) the second switch 266. The second switch 266 may allow the control signal transmitted from the second gate driver 263 to the second inverter 261 in response to the second on-signal of the second processor 220. In addition, the second switch 266 may block the control signal transmitted from the second gate driver 263 to the second inverter 261 in response to the second on-signal not being received from the second processor 220.

While the second processor 220 is deactivated, the second switch 266 may not receive the second on-signal. In addition, while activated, the second processor 220 may provide the second on-signal to the second switch 266. Thus, the second switch 266 may block the control signal transmitted from the second gate driver 263 to the second inverter 261 while the second processor 220 is deactivated and allow the control signal transmitted from the second gate driver 263 to the second inverter 261 while the second processor 220 is activated.

In this way, the first switch 265 may allow the control signal transmitted from the first gate driver 253 to the second inverter 261 while the first processor 210 is normally operating and block the control signal transmitted from the first gate driver 253 to the second inverter 261 unless the first processor 210 normally operates.

In addition, the second switch 266 may block the control signal transmitted from the second gate driver 263 to the second inverter 261 while the first processor 210 is normally operating and allow the control signal transmitted from the second gate driver 263 to the second inverter 261 unless the first processor 210 normally operates.

The second inverter 261 may receive the control signal from the first gate driver 253 while the first processor 210 is normally operating and receive the control signal from the second gate driver 263 unless the first processor 210 normally operates.

As described above, while normally operating, the first processor 210 may control a first parking brake module 22 of a second wheel 20 and a second parking brake module 32 of a third wheel 30. In addition, the second processor 220 may control the second parking brake module 32 of the third wheel 30 when the first processor 210 does not normally operate. Accordingly, even when the first processor 210 does not normally operate, the brake device 100 may control a parking brake of a vehicle and brake the vehicle through the second processor 220.

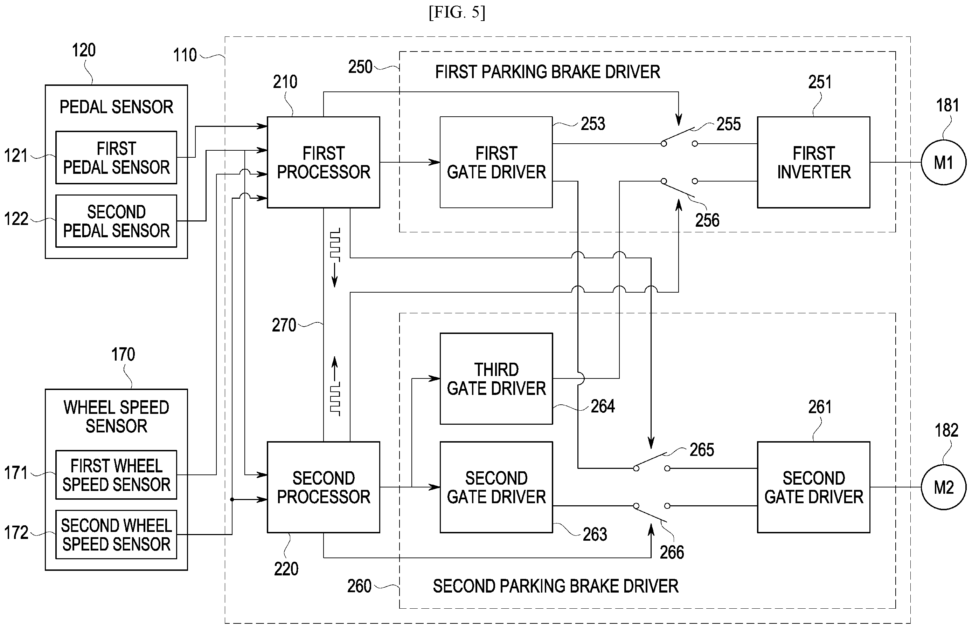

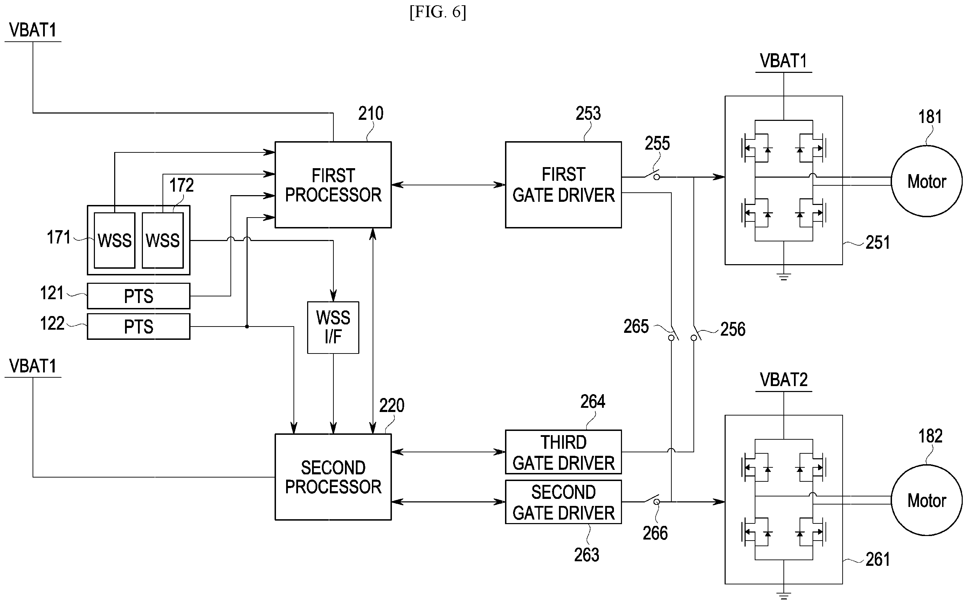

FIGS. 5 and 6 illustrate an example of a processor and a parking brake driver of a control circuit included in a brake device according to one embodiment.

Referring to FIGS. 5 and 6, a brake device 100 may include a pedal sensor 120, a wheel speed sensor 170, a control circuit 110, a first parking brake motor 181, and a second parking brake motor 182. The pedal sensor 120, the first parking brake motor 181, and the second parking brake motor 182 may be the same as the pedal sensor, the wheel speed sensor, the first parking brake motor, and the second parking brake motor described above with reference to FIG. 3.

The control circuit 110 may include a first processor 210, a second processor 220, a signal line 270, a connection switch 271, a first parking brake driver 250, and a second parking brake driver 260. The first processor 210 and the second processor 220 may be the same as the first processor and the second processor described above with reference to FIG. 3. In addition, the signal line 270 may be the same as the signal line described above with reference to FIG. 4.

The first parking brake driver 250 may include a first inverter 251, a first gate driver 253, a third switch 255, and a fourth switch 256. The first inverter 251, the first gate driver 253, the third switch 255, and the fourth switch 256 may not correspond to essential components of the first parking brake driver 250, and at least some thereof may be omitted.

The second parking brake driver 260 may include a second inverter 261, a second gate driver 263, a third gate driver 264, a first switch 265, and a second switch 266. The second inverter 261, the second gate driver 263, the third gate driver 264, the first switch 265, and the second switch 266 may not correspond to essential components of the second parking brake driver 260, and at least some thereof may be omitted.

The first inverter 251 and the first gate driver 253 may be the same as the first inverter and first gate driver described above with reference to FIG. 4.

The second inverter 261, the second gate driver 263, the first switch 265, and the second switch 266 may be the same as the second inverter, the second gate driver, the first switch, and the second switch described with reference to FIG. 4.

The third gate driver 264 may be electrically provided between the second processor 220 and the first inverter 251 and may drive an input terminal of the first inverter 251 in response to a control signal of the second processor 220. The configuration and operation of the third gate driver 264 may be the same as those of the second gate driver 263.

The third switch 255 may allow or block a control signal transmitted from the first gate driver 253 to the first inverter 251.

The first processor 210 may provide a third on-signal to the third switch 255 to turn on (close) the third switch 255. The third switch 255 may allow the control signal transmitted from the first gate driver 253 to the first inverter 251 in response to the third on-signal of the first processor 210. In addition, the third switch 255 may block the control signal transmitted from the first gate driver 253 to the first inverter 251 in response to the third on-signal not being received from the first processor 210.

While normally operating, the first processor 210 may provide the third on-signal to the third switch 255. On the other hand, unless the first processor 210 normally operates, the third on-signal may not be provided to the third switch 255. Thus, the third switch 255 may allow the control signal transmitted from the first gate driver 253 to the first inverter 251 while the first processor 210 is normally operating and block the control signal transmitted from the first gate driver 253 to the first inverter 251 unless the first processor 210 normally operates.

The fourth switch 256 may allow or block a control signal transmitted from the third gate driver 264 to the second inverter 261.

The second processor 220 may provide a fourth on-signal to the fourth switch 256 to turn on (close) the fourth switch 256. The fourth switch 256 may allow the control signal transmitted from the third gate driver 264 to the first inverter 251 in response to the fourth on-signal of the second processor 220. In addition, the fourth switch 256 may block the control signal transmitted from the third gate driver 264 to the first inverter 251 in response to the fourth on-signal not being received from the second processor 220.

While the second processor 220 is deactivated, the fourth switch 256 may not receive the fourth on-signal. In addition, while activated, the second processor 220 may provide the fourth on-signal to the fourth switch 256. Thus, the fourth switch 256 may block the control signal transmitted from the third gate driver 264 to the first inverter 251 while the second processor 220 is deactivated and allow the control signal transmitted from the third gate driver 264 to the first inverter 251 while the second processor 220 is activated.

In this way, when the first processor 210 is normally operating, the third switch 255 may allow the control signal to be transmitted from the first gate driver 253 to the first inverter 251, and unless the first processor 210 normally operates, the control signal transmitted from the first gate driver 253 to the first inverter 251 may be blocked.

In addition, when the first processor 210 is normally operating, the fourth switch 256 may block the control signal transmitted from the third gate driver 264 to the first inverter 251, and unless the first processor 210 normally operates, the control signal transmitted from the third gate driver 264 to the first inverter 251 may be allowed.

The first inverter 251 may receive the control signal from the first gate driver 253 while the first processor 210 is normally operating and receive the control signal from the third gate driver 264 unless the first processor 210 normally operates.

As described above, while normally operating, the first processor 210 may control a first parking brake module 22 of a second wheel 20 and a second parking brake module 32 of a third wheel 30. In addition, the second processor 220 may control the first parking brake module 22 and the second parking brake module 32 when the first processor 210 does not normally operate. Accordingly, even when the first processor 210 does not normally operate, the brake device 100 may control a parking brake of a vehicle and brake the vehicle through the second processor 220.

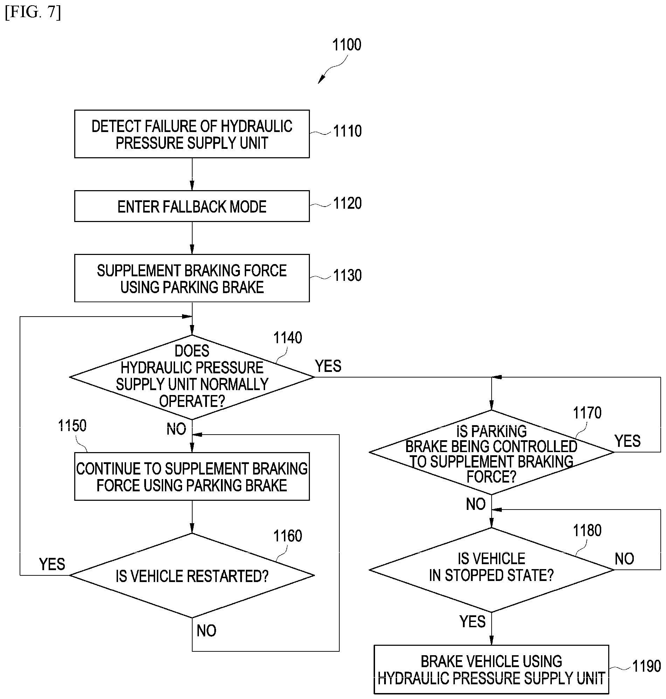

FIG. 7 illustrates an example of the operation of a brake device according to one embodiment.

An operation 1100 of the brake device 100 will be described with reference to FIG. 7.

The brake device 100 may detect a failure of the hydraulic pressure supply unit 150 (1110).

For example, the first processor 210 may diagnose the hydraulic pressure supply unit 150 and identify a failure of the hydraulic pressure supply unit 150 during the diagnosis of the hydraulic pressure supply unit 150. For example, the first processor 210 may identify a failure of the hydraulic motor 156, the sticking of the hydraulic piston 153, or the like.

The brake device 100 may enter a fallback mode (1120).

For example, the first processor 210 may control the hydraulic pressure control unit 160 to hydraulically connect the master cylinder 140 and the wheel cylinders 11, 21, 31, and 41.

In the fallback mode, hydraulic pressure may be generated in the master cylinder 140 by a driver's pedal force, and the hydraulic pressure of the master cylinder 140 may be provided to the wheel cylinders 11, 21, 31, and 41.

The brake device 100 may supplement a braking force using a parking brake (1130).

For example, during the fallback mode, the first processor 210 may provide a request for data about the failure of the hydraulic pressure supply unit 150 and a request for controlling the parking brake modules 22 and 32 to the second processor 220 through a communication network.

The second processor 220 may control the parking brake modules 22 and 32 based on a second pedal signal of the second pedal sensor 122 in response to the request from the first processor 210.

The brake device 100 may identify whether the hydraulic pressure supply unit 150 is normally operating (1140).

For example, the first processor 210 or the second processor 220 may diagnose the hydraulic pressure supply unit 150 and identify a failure of the hydraulic pressure supply unit 150 during the diagnosis of the hydraulic pressure supply unit 150.

When it is identified that the hydraulic pressure supply unit 150 does not normally operate (NO of 1140), the brake device 100 may continue to supplement the braking force using the parking brake (1150).

For example, when the failure of the hydraulic pressure supply unit 150 is identified, the second processor 220 may control the parking brake modules 22 and 32 based on the second pedal signal of the second pedal sensor 122 during the fallback mode.

The brake device 100 may identify whether a vehicle is restarted (1160).

For example, the first processor 210 or the second processor 220 may obtain information about starting of the vehicle through a vehicle communication network.

When it is identified that the vehicle has not been restarted (NO of 1160), the brake device 100 may continue to supplement the braking force using the parking brake.

When it is identified that the vehicle has been restarted (YES of 1160), the brake device 100 may identify whether the hydraulic pressure supply unit 150 is normally operating (1140).

When it is identified that the hydraulic pressure supply unit 150 is normally operating (YES of 1140), the brake device 100 may identify whether the parking brake is being controlled to supplement a braking force (1170).

For example, when the normal operation of the hydraulic pressure supply unit 150 is identified, the first processor 210 may identify whether the parking brake modules 22 and 23 are being controlled based on first and second pedal signals of the first and second pedal sensors.

When it is identified that the parking brake is being controlled to supplement the braking force (YES of 1170), the brake device 100 may continue to identify whether the parking brake is being controlled to supplement the braking force.

When it is identified that the parking brake is not being controlled to supplement the braking force (NO of 1170), the brake device 100 may identify whether the vehicle is in a stopped state (1180).

For example, the first processor 210 may identify whether the vehicle is in a stopped state based on an output signal of the wheel speed sensor 170.

When it is identified that the vehicle is not in a stopped state (NO of 1180), the brake device 100 may continue to identify whether the vehicle is in a stopped state.

When it is identified that the vehicle is in a stopped state (YES of 1180), the brake device 100 may brake the vehicle using the hydraulic pressure supply unit 150 (1190).

For example, the first processor 210 may release the fallback mode and control the hydraulic pressure supply unit 150 and/or the hydraulic pressure control unit 160 based on a pedal signal of a pedal sensor 120.

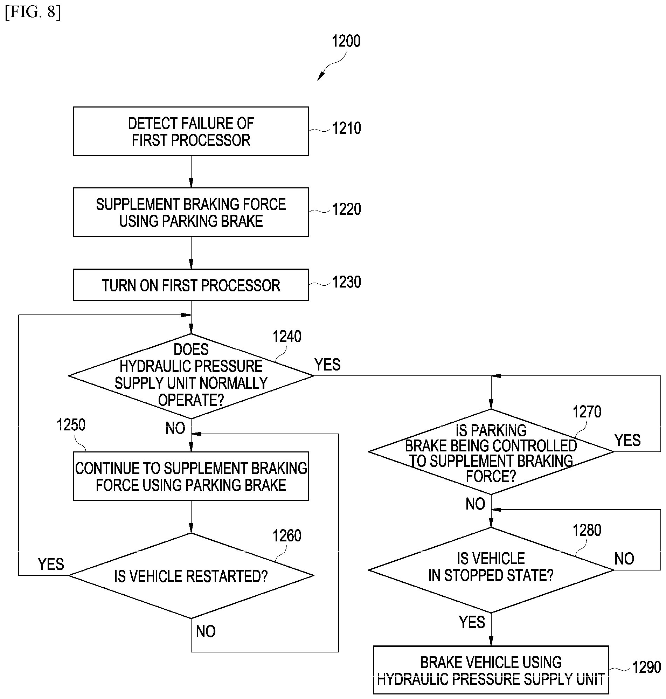

FIG. 8 illustrates an example of the operation of the brake device according to one embodiment.

An operation 1200 of the brake device 100 will be described with reference to FIG. 8.

The brake device 100 may detect a failure of the first processor 210 (1210).

For example, the second processor 220 may identify a failure of the first processor 210 based on a periodic signal not being received from the first processor 210.

The brake device 100 may supplement a braking force using a parking brake (1220).

For example, the second processor 220 may control the parking brake modules 22 and 32 based on a second pedal signal of the second pedal sensor 122 in response to the failure of the first processor 210.

The brake device 100 may turn on the first processor 210 (1230).

For example, the second processor 220 may provide a signal for resetting or turning on the first processor 210 to the first processor 210.

The brake device 100 may identify whether the hydraulic pressure supply unit 150 is normally operating (1240). When it is identified that the hydraulic pressure supply unit 150 does not normally operate (NO of 1240), the brake device 100 may continue to supplement the braking force using the parking brake (1250) and identify whether a vehicle is restarted (1260). When it is identified that the vehicle has been restarted (YES of 1260), the brake device 100 may re-identify whether the hydraulic pressure supply unit 150 is normally operating (1240).

Operations 1240, 1250, and 1260 may be the same as operations 1140, 1150, and 1160 described with reference to FIG. 7, respectively.

When the brake device 100 identifies that the hydraulic pressure supply unit 150 is normally operating (YES of 1240), the brake device 100 may identify whether the parking brake is being controlled to supplement a braking force (1270). When the brake device 100 identifies that the parking brake is not being controlled to supplement the braking force (NO of 1270), the brake device 100 may identify whether the vehicle is in a stopped state (1280). When the brake device 100 identifies that the vehicle is in a stopped state (YES of 1280), the brake device 100 may brake the vehicle using the hydraulic pressure supply unit 150 (1290).

Operations 1270, 1280, and 1290 may be the same as operations 1170, 1180, and 1190 described with reference to FIG. 7, respectively.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

Computer-readable recording media include all types of recording media in which instructions which can be decoded by a computer are stored. For example, there may be a ROM, a random access memory (RAM), a magnetic tape, a magnetic disc, a flash memory, an optical data storage device, and the like.

A machine-readable storage medium may be provided in the form of a non-transitory storage medium. Herein, "non-transitory" merely means that the storage medium is tangible and does not include a signal (for example, electromagnetic waves), and the term does not differentiate data being semi-permanently stored or being temporarily stored in the storage medium. For example, a "non-transitory storage medium" may include a buffer in which data is temporarily stored.

As described above, the disclosed embodiments have been described with reference to the accompanying drawings. It will be obvious to those of ordinary skill in the art that the present disclosure may be practiced in other forms than the disclosed embodiments without changing the technical idea or essential features of the present disclosure. The disclosed embodiments are illustrative and should not be construed in a limited sense.

## Claims

1. A brake device comprising:
a hydraulic pressure supply unit fluidly connected to wheel cylinders of a vehicle;
a parking brake provided on at least one of the wheel cylinders;
a first processor electrically connected to the hydraulic pressure supply unit and the parking brake; and
a second processor electrically connected to the parking brake and electrically connected to the first processor through a signal line,
wherein the first processor controls the hydraulic pressure supply unit based on an output signal of a pedal sensor of the vehicle, controls the parking brake based on an output signal of a parking switch of the vehicle, and provides a periodic signal to the second processor through the signal line, and
when the periodic signal is not received from the first processor, the second processor controls the parking brake based on the output signal of the pedal sensor.

2. The brake device of claim 1, wherein, when the periodic signal is not received from the first processor, the second processor controls the parking brake based on the output signal of the parking switch.

3. The brake device of claim 1, wherein, when the periodic signal is not received from the first processor and the output signal of the pedal sensor is valid, the second processor controls the parking brake based on the output signal of the pedal sensor.

4. The brake device of claim 1, wherein the first processor controls the hydraulic pressure supply unit based on an output signal of a wheel speed sensor of the vehicle, and
when the periodic signal is not received from the first processor, the second processor controls the parking brake based on the output signal of the wheel speed sensor.

5. The brake system of claim 4, wherein, when the periodic signal is not received from the first processor and the output signal of the wheel speed sensor is valid, the second processor controls the parking brake based on the output signal of the pedal sensor.

6. The brake device of claim 1, wherein, when the periodic signal is received from the first processor while the parking brake is controlled based on the output signal of the pedal sensor, the second processor identifies whether the vehicle is stopped based on an output signal of a wheel speed sensor of the vehicle.

7. The brake device of claim 6, wherein, when it is identified that the vehicle is stopped, the second processor terminates controlling the parking brake based on the output signal of the pedal sensor, and
when it is identified that the vehicle is stopped, the first processor controls the hydraulic pressure supply unit based on the output signal of the pedal sensor of the vehicle.

8. The brake device of claim 1, wherein, when a signal indicating a failure of the hydraulic pressure supply unit is received, the second processor controls the parking brake based on the output signal of the pedal sensor.

9. The brake device of claim 8, wherein, when a signal indicating a normal operation of the hydraulic pressure supply unit is received while the parking brake is controlled based on the output signal of the pedal sensor, the second processor identifies whether the vehicle is stopped based on an output signal of a wheel speed sensor of the vehicle.

10. The brake device of claim 9, wherein, when it is identified that the vehicle is stopped, the second processor terminates controlling the parking brake based on the output signal of the pedal sensor, and
when it is identified that the vehicle is stopped, the first processor controls the hydraulic pressure supply unit based on the output signal of the pedal sensor of the vehicle.

11. A method of controlling a brake device including a first processor and a second processor electrically connected to the first processor through a signal line, the method comprising:
controlling, by the first processor, a hydraulic pressure supply unit fluidly connected to wheel cylinders of a vehicle based on an output signal of a pedal sensor of the vehicle;
controlling, by the first processor, a parking brake provided on at least one of the wheel cylinders based on an output signal of a parking switch of the vehicle;
providing, by the first processor, a periodic signal to the second processor through the signal line; and
when the periodic signal is not received from the first processor, controlling, by the second processor, the parking brake based on the output signal of the pedal sensor.

12. The method of claim 11, further comprising, when the periodic signal is not received from the first processor, controlling, by the second processor, the parking brake based on the output signal of the parking switch.

13. The method of claim 11, wherein the controlling, by the second processor, of the parking brake based on the output signal of the pedal sensor includes, when the periodic signal is not received from the first processor and the output signal of the pedal sensor is valid, controlling, by the second processor, the parking brake based on the output signal of the pedal sensor.

14. The method of claim 11, further comprising:
controlling, by the first processor, the hydraulic pressure supply unit based on an output signal of a wheel speed sensor of the vehicle; and
when the periodic signal is not received from the first processor, controlling, by the second processor, the parking brake based on the output signal of the wheel speed sensor.

15. The method of claim 14, wherein the controlling, by the second processor, of the parking brake based on the output signal of the wheel speed sensor includes, when the periodic signal is not received from the first processor and the output signal of the wheel speed sensor is valid, controlling, by the second processor, the parking brake based on the output signal of the pedal sensor.

16. The method of claim 11, further comprising, when the periodic signal is received from the first processor while the parking brake is controlled based on the output signal of the pedal sensor, identifying, by the second processor, whether the vehicle is stopped based on an output signal of a wheel speed sensor of the vehicle.

17. The method of claim 16, further comprising:
when it is identified that the vehicle is stopped, terminating, by the second processor, controlling the parking brake based on the output signal of the pedal sensor; and
when it is identified that the vehicle is stopped, controlling, by the first processor, the hydraulic pressure supply unit based on the output signal of the pedal sensor of the vehicle.

18. The method of claim 11, further comprising, when a signal indicating a failure of the hydraulic pressure supply unit is received, controlling, by the second processor, the parking brake based on the output signal of the pedal sensor.

19. The method of claim 18, further comprising, when a signal indicating a normal operation of the hydraulic pressure supply unit is received while the parking brake is controlled based on the output signal of the pedal sensor, identifying, by the second processor, whether the vehicle is stopped based on an output signal of a wheel speed sensor of the vehicle.

20. The method of claim 19, further comprising:
when it is identified that the vehicle is stopped, terminating, by the second processor, controlling the parking brake based on the output signal of the pedal sensor; and
when it is identified that the vehicle is stopped, controlling, by the first processor, the hydraulic pressure supply unit based on the output signal of the pedal sensor of the vehicle.
